# EUROPÄISCHE PATENTSCHRIFT

(11) **EP 0 927 308 B1**
(45) Veröffentlichungstag und Bekanntmachung des Hinweises auf die Patenterteilung: **11.06.2003**
(21) Anmeldenummer: 97909160.0
(22) Anmeldetag: 16.09.1997
(51) Int. Cl.: F16B 9/02, F16B 2/24

(54) **RASTVORRICHTUNG FÜR EIN GERADLINIG VERSCHIEBBARES BAUTEIL**
LOCK-IN DEVICE FOR A STRAIGHT MOVING BUILDING COMPONENT
DISPOSITIF A CRANS POUR ELEMENT DE CONSTRUCTION A DEPLACEMENT LINEAIRE

(30) Priorität: 18.09.1996 DE 29616933 U
(43) Veröffentlichungstag der Anmeldung: 07.07.1999
(73) Patentinhaber: SIEMENS AKTIENGESELLSCHAFT, 80333 München (DE)
(72) Erfinder: HODZIC, Husein, D-10717 Berlin (DE)
(86) Internationale Anmeldenummer: DE9702125
(87) Internationale Veröffentlichungsnummer: WO98012436

(56) Entgegenhaltungen:
- FR-A- 1 143 422
- FR-A- 2 170 675
- GB-A- 552 167
- US-A- 2 845 291

## Beschreibung

Die Erfindung betrifft eine Rastvorrichtung umfassend eine mit einer Öffnung versehene Wand, ein in die Öffnung der Wand geradlinig einführbares, mit einer Rastnut versehenes Bauteil und eine aus Federdraht bestehende Rastfeder, die zwei Schenkel aufweist,
- bei der erste Enden der Schenkel einen die Dicke der Wand etwas übersteigenden Abstand zueinander aufweisen und die Schenkel der Rastfeder voneinander abgewandten Flächen der Wand gegenüberliegen und
- bei der einer der Schenkel zur federnden Anlage an dem Bauteil bestimmte Teilstücke besitzt, die die Rastnut erfassen.

Eine durch die GB 552 167 A bekanntgewordene Rastvorrichtung dieser Art dient zur Fixierung einer Abkröpfung einer Schubstange an einer Kurbel. Diese Rastvorrichtung hat die Eigenschaft, daß sie sich auch in Apparaten oder Geräten mit einem recht komplexen und gedrängten Aufbau leicht montieren läßt.

Der Erfindung liegt die Aufgabe zugrunde, eine ähnlich einfache Anordnung, wie sie in der genannten GB-Patentschrift beschrieben ist, für geradlinig verschiebbare Bauteile verwendbar zu machen. Diese Aufgabe tritt beispielsweise bei elektrischen Schaltgeräten der Niederspannungstechnik auf, um ein Bauteil in wenigstens zwei definierte Stellungen zu bringen.

Diese Aufgabe wird gemäß der Erfindung dadurch gelöst, daß dass die Schenkel relativ zueinander eine zur Erzielung einer Klemmwirkung dienende winklige Stellung derart aufweisen, dass die Rastfeder im Klemmsitz an der Wand gehalten ist, wobei zum Aufrechterhalten der Klemmwirkung der Schenkel die Rastnut des Bauteiles an die Rastfeder derart angepasst ist, dass bei einer Verschiebung des Bauteiles in der Öffnung der Wand eine ausschließlich elastische relative Biegung der Schenkel auftritt.

Die Montage einer Rastvorrichtung nach der Erfindung ist gegenüber der eingangs erwähnten bekannten Anordnung durch einen Klemmsitz der Rastfeder an der Wand erleichtert. Es kann somit zunächst die Rastfeder an der Wand angebracht werden, ohne daß zugleich das verschiebbare Bauteil eingeführt wird. Zugleich sorgt die mit dem Klemmsitz verbundene relative Vorspannung der Schenkel der Rastfeder gegenüber der Wand für eine definierte Endstellung des verschiebbaren Bauteiles in seiner eingerasteten Stellung. Außerdem wird durch die Anpassung der Rastnut des verschiebbaren Bauteils an die Rastfeder bei der Verschiebung des Bauteils nicht nur eine Überlastung der Rastfeder vermieden, sondern auch durch Überwindung einer vorgegebenen Haltekraft eine für den Benutzer günstige Bedienungsweise ermöglicht.

Im Rahmen der Erfindung können die Teilstücke des einen Schenkels der Rastfeder durch eine mittige schleifenförmige Biegung eines Abschnittes des Federdrahtes gebildet sein, wobei Endabschnitte des Abschnittes den anderen Schenkel der Rastfeder bilden.

Die Erfindung wird im folgenden anhand des in den Figuren dargestellten Ausführungsbeispieles näher erläutert.

Die Figur 1 zeigt einen gestreckten Abschnitt eines Federdrahtes mit Markierungen von Bereichen, die nach der Verarbeitung des Abschnittes durch Biegen bestimmte Funktionen übernehmen.

Die Figur 2 zeigt eine aus dem Abschnitt gemäß der Figur 1 hergestellte Rastfeder.

In der Figur 3 ist eine Rastvorrichtung veranschaulicht, die eine Rastfeder gemäß der Figur 2 sowie eine Wand und ein verschiebbares Bauteil umfaßt.

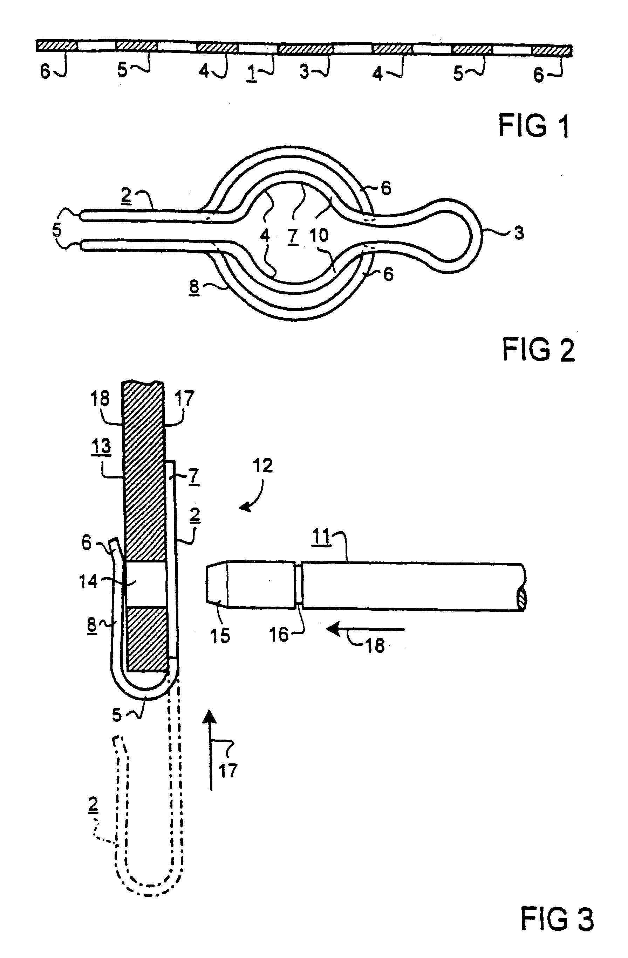

Der in der Figur 1 gezeigte Abschnitt 1 aus Federdraht dient zur Herstellung einer Rastfeder 2 gemäß der Figur 2. Um die Vorgebung zu veranschaulichen, sind einzelne Bereiche in der Figur 1 schraffiert gekennzeichnet und mit Bezugszeichen versehen, die auch in der Figur 2 eingezeichnet sind. Die Markierungen sind weder nach ihrer Länge noch ihrer Lage maßstäblich angebracht und sollen nur die prinzipielle Zuordnung erkennen lassen.

Ein mittiger Bereich 3 des Abschnittes 1 (Figur 1) ergibt den schleifenförmigen Bereich an der rechten Seite der Rastfeder 2 (Figur 2). Beidseitig des mittigen Bereiches 3 gelegene Bereiche 4 des Abschnittes 1 ergeben zentrale, etwa halbkreisförmige Biegungen der Rastfeder 2, die zur Erfassung eines verschiebbaren Bauteiles 11 dienen, wie noch anhand der Figur 3 erläutert wird. In den wiederum beidseitig der Bereiche 4 gelegenen Bereichen 5 ist der Abschnitt 1 rechtwinklig zur Ebene der Figur 2 etwa U-förmig gebogen, wodurch eine - im Profil gesehen - insgesamt etwa klammerartige oder haarnadelartige Gestalt entsteht, wie dies die Figur 3 veranschaulicht. Endbereiche 6 des Abschnittes 1 sind gleichfalls etwa halbkreisförmig gebogen, jedoch mit einem größeren Radius als die Bereiche 4.

Insgesamt weist die Rastfeder 2 zwei Schenkel 7 und 8 auf, wobei der Schenkel 7 zwei aus den Bereichen 4 gebildete gegenüberliegende Teilstücke 10 besitzt, die zur Anlage an dem verschiebbaren Bauteil 11 vorgesehen sind. Die Schenkel 7 und 8 stehen einander nicht parallel gegenüber, sondern mit einem geringen Neigungswinkel. Auch ist der Abstand der Schenkel 7 und 8 in den Bereichen 5 etwas größer als die Dicke der Wand 13. Hierdurch wird die gewünschte Klemmwirkung auch dann erzielt, wenn die Form der Rastfeder 2 und die Dicke der Wand 13 von vorgegebenen Abmessungen im Rahmen einer üblichen Toleranz abweichen sollte.

In der Figur 3 ist schematisch eine Rastvorrichtung 12 gezeigt, die aus lediglich drei Teilen besteht, nämlich aus der schon erläuterten Rastfeder 2, dem erwähnten verschiebbaren Bauteil 11 und einer Wand 13, die mit einer Öffnung 14 zur Führung des Bauteiles 11 versehen ist. Das Bauteil 11 ist in dem gezeigten Beispiel als zylindrischer Stift ausgebildet und weist ein kegelstumpfförmiges Frontteil 15 sowie an seinem Umfang eine Nut 16 auf. Zur Montage wird zunächst die Rastfeder 2 in der durch einen Pfeil 17 veranschaulichten Weise an der Wand 13 angebracht, wobei die Schenkel 7 und 8 federnd zur Anlage an gegenüberliegeden Flächen 17 und 18 der Wand gelangen. Um den gewünschten Klemmsitz der Rastfeder 2 an der Wand 13 zu erreichen, sind die Schenkel 7 und 8 leicht winklig zueinander gebogen.

Die Öffnung 14 der Wand 13 ist so positioniert, daß die Teilstücke 10 der Rastfeder 2 auf die Öffnung 14 ausgerichtet sind und daher von dem Frontteil 15 erfaßt werden, wenn das Bauteil 11 in der Richtung eines Pfeiles 18 in die Öffnung 14 der Wand 13 eingeführt wird. Die Nut 16 ist derart an die Rastfeder 2 angepaßt, daß bei einer Verschiebung des Bauteiles 11 eine ausschließlich elastische relative Biegung der Schenkel 7 und 8 auftritt. Damit bleiben die Klemmwirkung und die Rastwirkung der Rastfeder 2 stets erhalten. Auch wird hierdurch vermieden, daß die Rastfeder 2 ihren Halt verliert, wenn beispielsweise bei einer Reparatur des Gerätes das Bauteil 11 herausgenommen werden muß.

## Patentansprüche

1. Rastvorrichtung (12) umfassend
eine mit einer Öffnung (14) versehene Wand (13), ein in die Öffnung (14) der Wand geradlinig einführbares, mit einer Rastnut (16) versehenes Bauteil (11) und eine aus Federdraht bestehende Rastfeder (2), die zwei Schenkel (7, 8) aufweist,
- bei der erste Enden der Schenkel (7, 8) einen die Dicke der Wand (13) etwas übersteigenden Abstand zueinander aufweisen und die Schenkel (7, 8) der Rastfeder voneinander abgewandten Flächen (17, 18) der Wand gegenüberliegen und
- bei der einer der Schenkel (7) zur federnden Anlage an dem Bauteil (11) bestimmte Teilstücke (10) besitzt, die die Rastnut (16) erfassen,
**dadurch gekennzeichnet,**
- **dass** die Schenkel (7, 8) relativ zueinander eine zur Erzielung einer Klemmwirkung dienende winklige Stellung derart aufweisen, dass die Rastfeder (2) im Klemmsitz an der Wand (13) gehalten ist
- wobei zum Aufrechterhalten der Klemmwirkung der Schenkel die Rastnut (16) des Bauteiles (11) an die Rastfeder (2) derart angepasst ist, dass bei einer Verschiebung des Bauteiles in der Öffnung (14) der Wand eine ausschließlich elastische relative Biegung der Schenkel (7, 8) auftritt.

2. Rastvorrichtung nach Anspruch 1,
**dadurch gekennzeichnet, daß**
die Teilstücke (10) des einen Schenkels (7) der Rastfeder (2) durch eine mittige schleifenförmige Biegung eines Abschnittes (1) des Federdrahtes gebildet sind, wobei Endabschnitte (6) des Abschnittes (1) den anderen Schenkel (8) der Rastfeder (2) bilden.

## Claims

1. Latching device (12) comprising
a wall (13) provided with an opening (14), a component (11), which can be introduced rectilinearly into the opening (14) of the wall and is provided with a latching groove (16), and a latching spring (2), which comprises spring wire and has two legs (7, 8),
- in the case of which first ends of the legs (7, 8) are spaced apart from one another by a distance which exceeds the thickness of the wall (13) to some extent, and the legs (7, 8) of the latching spring are located opposite surfaces (17, 18) of the wall which are directed away from one another, and
- in the case of which one of the legs (7) has segments (10) which are intended for resilient abutment against the component (11) and grip the latching groove (16),
**characterized**
- **in that** the legs (7, 8) have an angled relative position which serves for achieving a clamping action such that the latching spring (2) is retained with a clamping fit on the wall (13),
- it being the case that, in order to maintain the clamping action of the legs, the latching groove (16) of the component (11) is adapted to the latching spring (2) such that displacement of the component in the opening (14) of the wall results in the legs (7, 8) bending relative to one another in an exclusively elastic manner.

2. Latching device according to Claim 1, **characterized in that** the segments (10) of one leg (7) of the latching spring (2) are formed by a section (1) of the spring wire being bent centrally in the form of a loop, end sections (6) of the section (1) forming the other leg (8) of the latching spring (2).

## Revendications

1. Dispositif (12) d'encliquetage comprenant
une paroi (13) munie d'une ouverture (14), un élément (11) pouvant être introduit en ligne droite dans l'ouverture (14) de la paroi et muni d'une gorge (16) d'encliquetage et un ressort (2) d'encliquetage qui est en un fil métallique pour ressort et qui a deux branches (7, 8),
- dans lequel des premières extrémités des branches (7, 8) sont à une distance l'une de l'autre excédant un peu l'épaisseur de la paroi (13) et les branches (7, 8) du ressort d'encliquetage sont opposées aux surfaces (17, 18) de la paroi qui sont éloignées l'une de l'autre et
- dans lequel l'une des branches (7) a, pour l'appui élastique sur l'élément (11), des pièces (10) déterminées qui prennent la gorge (16) d'encliquetage,
**caractérisé**
- **en ce que** les branches (7, 8) ont l'une par rapport à l'autre une position angulaire servant à obtenir un effet de serrage, de sorte que le ressort (2) d'encliquetage est maintenu à ajustement pressé sur la paroi (13)
- la gorge (16) d'encliquetage de l'élément (11) étant, pour maintenir l'effet de serrage des branches, adaptée au ressort (2) d'encliquetage de manière à ce que pour un déplacement de l'élément dans l'ouverture (14) de la paroi il se produise exclusivement une courbure relativement élastique des branches (7, 7).

2. Dispositif d'encliquetage suivant la revendication 1,
**caractérisé en ce que** les pièces (10) de l'une des branches (7) du ressort (2) d'encliquetage sont formées par une courbure au milieu en forme de boucle d'un tronçon (1) du fil métallique servant de ressort, les tronçons (6) d'extrémité du tronçon (1) formant l'autre branche (8) du ressort (2) d'encliquetage.
